# EUROPÄISCHE PATENTSCHRIFT

(11) **EP 2 552 679 B1**
(45) Veröffentlichungstag und Bekanntmachung des Hinweises auf die Patenterteilung: **11.07.2018**
(21) Anmeldenummer: 11712770.4
(22) Anmeldetag: 01.04.2011
(51) Int. Cl.: B29C 70/38, B29D 99/00, B29L 31/30

(54) **VERFAHREN UND VORRICHTUNG ZUR HERSTELLUNG EINES FASERVERSTÄRKTEN THERMOPLASTISCHEN VERBUNDBAUTEILS**
METHOD AND DEVICE FOR PRODUCING A FIBER-REINFORCED THERMOPLASTIC COMPOSITE COMPONENT
PROCÉDÉ ET DISPOSITIF POUR RÉALISER UNE PIÈCE STRUCTURALE COMPOSITE THERMOPLASTIQUE RENFORCÉE PAR FIBRES

(30) Priorität: 02.04.2010 US 320343 P; 02.04.2010 DE 102010013713
(43) Veröffentlichungstag der Anmeldung: 06.02.2013
(73) Patentinhaber: Airbus Operations GmbH, 21129 Hamburg (DE)
(72) Erfinder: JESSRANG, Mathias, 21129 Hamburg (DE)
(74) Vertreter: LKGLOBAL Lorenz & Kopf PartG mbB Patentanwälte
(86) Internationale Anmeldenummer: PCT/EP2011/001663
(87) Internationale Veröffentlichungsnummer: WO 2011/120717

(56) Entgegenhaltungen:
- US-A1- 2009 211 698
- US-B1- 6 613 258

## Beschreibung

Die Erfindung betrifft ein Verfahren zur Herstellung eines faserverstärkten thermoplastischen Verbundbauteils nach dem Oberbegriff des Patentanspruchs 1, beispielsweise ein Schalenelement eines Flugzeugrumpfes, sowie eine Vorrichtung zur Durchführung des Verfahrens nach dem Oberbegriff des Patentanspruchs 9.

Faserverstärkte Verbundbauteile wie Schalenelemente eines Flugzeugrumpfes, weisen bekanntermaßen eine Hinterbaustruktur bestehend aus einer Vielzahl von Längsversteifungen, die unmittelbar an einem Hautfeld angebunden sind, und einer Vielzahl von Umfangsversteifungen auf, die über Beschläge bzw. Clips an dem Hautfeld angebunden und zusätzlich über Abstützelemente bzw. Cleats an den Längsversteifungen abgestützt sind.

Die Herstellung derartiger Rumpfsegmente erfolgt entweder in Differenzialbauweise oder in Integralbauweise. Bei der Differenzialbauweise werden die einzelnen Komponenten separat voneinander gefertigt und anschließend zum Gesamtbauteil montiert. Nachteilig an dieser Bauweise sind insbesondere die zeit- und kostenintensive Montage des Gesamtbauteils. Des Weiteren erfordert die Differenzialbauweise eine Vielzahl von Verbindungselementen zur Verbindung der Bauteilkomponenten untereinander. Die Integralbauweise, bei der die Einzelkomponenten integral als ein Gesamtbauteil gefertigt werden, zeichnet sich durch einen reduzierten Montageaufwand und aufgrund der Steigerung des Integrationsgrades durch einen erhöhten Fertigungsaufwand aus. Zur Reduzierung des Fertigungsaufwandes schlägt beispielsweise das Patent US 6 613 258 B1 vor, eine Rumpftonne aus faserverstärkten thermoplastischen Verbundmaterialien herzustellen. Die US 6 613 258 B1 beschreibt ein Verfahren zur Herstellung von Teilen mit großen Dimensionen, die aus einer Haut und Verstärkungselementen geformt sind, wie beispielsweise aus einem Verbundwerkstoff mit einer thermoplastischen Matrix hergestellte Rumpfsegmente eines Luftfahrzeugs. Nachdem Verstärkungselemente separat durch Drapierung, Verfestigung und Formgebung hergestellt sind, werden diese Verstärkungselemente auf einem Formwerkzeug angeordnet und die Haut wird simultan hergestellt und mit den Verstärkungselementen durch Diffusionsschweißen zusammengefügt. Genauer gesagt, wird die Haut durch den Drapierkopf drapiert und fortwährend verfestigt, so dass das benötigte Teil direkt erhalten wird. Dabei werden ausgehärtete Längsversteifungen in Vertiefungen eines zylindrischen Kerns gelegt. Anschließend wird der Kern um seine Längsachse in Rotation versetzt und ein bahnartiges Laminat auf dem Kern abgewickelt. Das Ablegen des Laminates erfolgt über einen Ablegekopf mittels Temperatur- und Druckbeaufschlagung, wodurch die Thermoplastmatrix aufgeschmolzen und das Laminat fest mit den Längsversteifungen verschweißt wird. Nachteilig an dieser Lösung sind jedoch die sehr engen Fertigungstoleranzen der Rumpftonnen.

Die Aufgabe der vorliegenden Erfindung ist es, ein Verfahren zur Herstellung eines faserverstärkten thermoplastischen Verbundbauteils, das die vorgenannten Nachteile beseitigt und einen optimalen Kompromiss zwischen dem Fertigungsaufwand, dem Montageaufwand und der Fertigungstoleranz bildet, sowie eine Vorrichtung zur Durchführung dieses Verfahrens zu schaffen.

Diese Aufgabe wird gelöst durch ein Verfahren mit den Merkmalen des Patentanspruchs 1 sowie durch eine Vorrichtung mit den Merkmalen des Patentanspruchs 9.

Bei einem erfindungsgemäßen Verfahren zur Herstellung eines faserverstärkten thermoplastischen Verbundbauteils, das aus einer Vielzahl von Bauteilkomponenten besteht und beispielsweise ein mit Versteifungselementen verstärktes Schalenelement eines Flugzeuges ist, werden die Bauteilkomponenten mittels einer die Geometrie des Verbundbauteils abbildenden Werkzeugform zueinander positioniert. Erfindungsgemäß werden die Bauteilkomponenten kontinuierlich in Vorschubrichtung bewegt und abschnittsweise über einen in Vorschubrichtung und in Gegenrichtung verfahrbaren Pressstempel miteinander verbunden. Das erfindungsgemäße Verfahren schafft einen optimalen Kompromiss zwischen dem Montageaufwand, dem Fertigungsaufwand und den Fertigungstoleranzen. Zwar wird durch die Schalenbauweise der Fertigungsaufwand gegenüber der gewickelten Tonnenbauweise gesteigert, jedoch erlaubt die Schalenbauweise einen verbesserten Toleranzausgleich. Die erfindungsgemäße Lösung vereinigt verschiedene Technologien wie das Pressen und Schweißen von thermoplastischen Bauteilen in einem kontinuierlichen Produktionsprozess zur Herstellung von Großbauteilen. Durch die kontinuierliche Bewegung der Bauteilkomponenten in Vorschubrichtung und durch die Verfahrbarkeit des Pressstempels in Vorschub- und in Gegenrichtung kann der Pressstempel entsprechend kompakt ausgeführt sein. Die Bauteilgröße ist quasi losgelöst von der Größe des Pressstempels, so dass beliebig bzw. nahezu beliebig große thermoplastische Verbundbauteile mit dem erfindungsgemäßen Verfahren hergestellt werden können.

Bei einem bevorzugten Ausführungsbeispiel wird der Pressstempel zum Verbinden der Bauteilkomponenten aus einer Startposition in Vorschubrichtung der Bauteilkomponenten verfahren und anschließend nach dem Verbinden der Bauteilkomponenten in Gegenrichtung bewegt. Hierdurch wird der Pressstempel quasi im Kreis geführt, was eine verhältnismäßig einfache Steuerung ermöglicht. Die Bewegung des Pressstempels in Vorschub- und in Gegenrichtung ist besonders einfach ausführbar, wenn der Pressstempel nach dem Anheben zurück zur Startposition bewegt wird.

Die Bewegung des Pressstempels in Vorschubrichtung richtet sich insbesondere nach seiner Erstreckung in Vorschubrichtung. Vorzugsweise hat der Pressstempel in Vorschubrichtung eine Erstreckung, die größer ist als ein Vorschubweg. Hierdurch wird gewährleistet, dass sich beim Pressen überlappende Pressbereiche ergeben, so dass sichergestellt ist, dass die Bauteilkomponenten über das gesamte Verbundbauteil miteinander verschweißt bzw. verklebt werden.

Bei einem Ausführungsbeispiel wird zumindest eine der Bauteilkomponenten, beispielsweise ein Laminat zur Herstellung des Hautfeldes, kontinuierlich vor dem Pressvorgang abgelegt. Hierdurch entfällt die Lagerung der jeweiligen Bauteilkomponenten, so dass lange Durchlaufzeiten durch Transfer zwischen unterschiedlichen Fertigungsmitteln nicht notwendig sind. Dabei ist es vorteilhaft, wenn zumindest eine Bauteilkomponente vor dem Ablegen derart erwärmt wird, dass ihre Thermoplastmatrix aufgeschmolzen ist.

Vorzugsweise werden zumindest einige der Bauteilkomponenten im erstarrten (Thermoplast "härtet" nicht wie Duroplast aus.) Zustand auf der Werkzeugform abgelegt. Dies erleichtert insbesondere die Handhabung der Bauteilkomponenten und deren Positionierung auf der Werkzeugform.

Zur Erzielung einer definierten Polymerstruktur ist es vorteilhaft, wenn die Bauteilkomponenten beim Verbinden durch den Pressstempel kontrolliert abgekühlt werden.

Eine erfindungsgemäße Vorrichtung zur Herstellung eines faserverstärkten thermoplastischen Verbundbauteils hat eine Werkzeugform zur Positionierung einzelner Bauteilkomponenten zueinander, die in eine Vorschubrichtung bewegbar ist, und einen in Vorschubrichtung und in Gegenrichtung verfahrbaren Pressstempel zum Verschweißen der Bauteilkomponenten. Die erfindungsgemäße Vorrichtung erlaubt die kontinuierliche Fertigung von Großbauteilen, wie beispielsweise Schalenelemente für einen Flugzeugrumpf, die über eine Hinterbaustruktur verstärkt sind. Dabei ist die Vorrichtung sehr kompakt ausführbar, da sich der Pressstempel aufgrund seiner in Vorschubrichtung und in Gegenrichtung gegebenen Verfahrbarkeit nicht über die gesamte Erstreckung der Werkzeugform in Vorschubrichtung erstrecken muss. Die erfindungsgemäße Vorrichtung erlaubt die Bewegung des Pressstempels quasi in einer Kreisbahn, so dass der Pressstempel an sich nur einen Bruchteil der Erstreckung der Werkzeugform in Längsrichtung aufzuweisen hat. Dabei kann die Kompaktheit des Pressstempels weiter gesteigert werden, wenn dieser auch in Querrichtung bewegbar ist.

Zur Erreichung von hohen Konsolidierungsgraden ist es vorteilhaft, wenn in der Werkzeugform im Bereich der aufzunehmenden Bauteilkomponenten zumindest jeweils eine Heizeinrichtung, beispielsweise eine Induktionsschweißeinrichtung, angeordnet ist.

Sonstige vorteilhafte Ausführungsbeispiele der vorliegenden Erfindung sind Gegenstand weiterer Unteransprüche.

Im Folgenden werden bevorzugte Ausführungsbeispiele der vorliegenden Erfindung anhand schematischer Darstellungen näher erläutert. Es zeigen:
Figur 1 einen Querschnitt durch eine erfindungsgemäßen Vorrichtung und
Figur 2 ein erfindungsgemäßes Verfahren.

In den Figuren tragen gleiche konstruktive Elemente die gleichen Bezugsziffern, wobei aus Gründen der Übersichtlichkeit bei mehreren gleichen konstruktiven Elementen in einer Figur lediglich ein Element mit einer Bezugsziffer versehen ist.

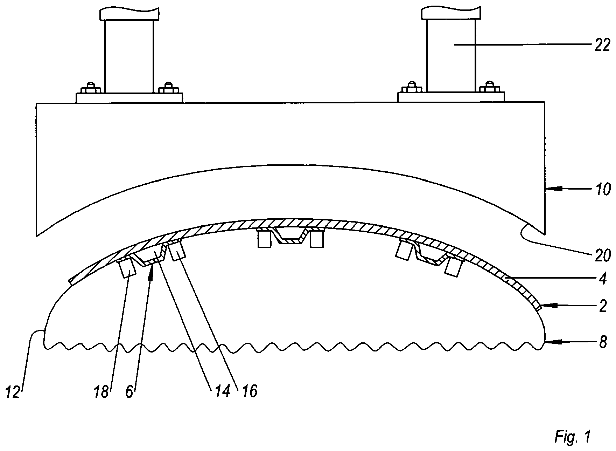

Figur 1 zeigt eine erfindungsgemäße Vorrichtung zur Herstellung eines faserverstärkten, beispielsweise mit Kohlenstofffasern verstärkten, Schalenelementes 2 auf Thermoplastbasis zur Herstellung eines Flugzeugrumpfes. Das Schalenelement 2 besteht aus einem faserverstärkten thermoplastischen Hautfeld 4 und einer Vielzahl von integralen faserverstärkten thermoplastischen Längsversteifungen 6 zur Verstärkung des Hautfeldes 4. Weitere Versteifungen wie Umfangsversteifungen sind aus Gründen der Übersichtlichkeit nicht dargestellt. Diese können ebenfalls integral mit dem Hautfeld 4 ausgebildet oder nachträglich angebunden werden.

Die Vorrichtung 1 hat eine untere Werkzeugform 8 sowie einen oberen Pressstempel 10. Die Werkzeugform 8 ist in Längsrichtung verfahrbar und hat eine der Geometrie des Flugzeugrumpfes entsprechende konkave Oberfläche 12 zum Ablegen von Laminatschichten zur Bildung des Hautfeldes 4, in der eine Vielzahl von sich in Längsrichtung der Werkzeugform 8 erstreckende Vertiefungen 14 zur Aufnahme der Längsversteifungen 6 ausgebildet ist. In dem gezeigten Ausführungsbeispiel sind die Längsversteifungen 6 als Omega-Profile ausgebildet, die im Bereich ihrer Fußabschnitte 16 mit dem Hautfeld 4 verschweißt bzw. verklebt sind. Zur Erzielung eines hohen Konsolidierungsgrades stützen sich die Fußabschnitte 16 auf jeweils einer in der Werkzeugform 8 im Bereich der Vertiefungen 14 angeordneten Heizeinrichtung 18, beispielsweise eine Induktionsschweißeinrichtung, ab.

Der Pressstempel 10 hat eine zur Oberfläche 12 der Werkzeugform 8 komplementär geformte konvexe Gegenfläche 20, die sich im Wesentlichen über die gesamte Breite der Oberfläche 12 erstreckt, so dass das Hautfeld 4 in einem Pressschritt in Querrichtung vollständig zwischen dem Presstempel 10 und der Werkzeugform 8 eingespannt werden kann. Er ist über eine Zylinderkolbenanordnung 22 orthogonal zur Werkzeugform 8 und in Vorschubrichtung und in Gegenrichtung der Werkzeugform 8 verfahrbar. Zur Erreichung einer kontrollierten Abkühlung weist der Pressstempel 10 eine nicht gezeigte Heizeinrichtung, beispielsweise eine Induktionsheizeinrichtung, auf.

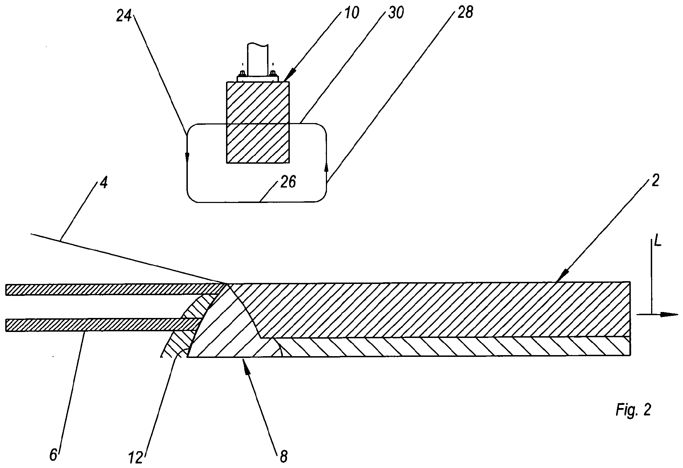

Im Folgenden wird anhand von Figur 2 ein erfindungsgemäßes Verfahren zur Herstellung eines Schalenelementes 2 für einen Flugzeugrumpf bzw. zur Ansteuerung der Vorrichtung 1 beschrieben: Zuerst werden die voll- oder teilkonsolidierten faserverstärkten thermoplastischen Längsversteifungen 6 in den Vertiefungen 14 der Werkzeugform 8 positioniert. Dann wird das faserverstärktes thermoplastisches Laminat zur Bildung des Hautfelds 4 auf die Oberfläche 12 und somit über die Fußabschnitte 16 der Längsversteifungen 6 kontinuierlich zugeführt. Die Laminatschichten wurden zuvor derart in einem nicht dargestellten Ofen erwärmt, dass ihre Thermoplastmatrix beim Ablegen auf der Werkzeugform 8 eine für den Pressformvorgang geeignete Viskosität besitzt. Der Pressstempel ist auf eine der erwünschten Materialeigenschaften des Thermoplasten angepasste Temperatur erwärmt und führt aus seiner Startposition eine Senkbewegung 24 in Richtung der abgelegten aufgeschmolzenen Laminatschichten aus, so dass diese durch Druck- und Temperaturbeaufschlagung mit den Fußabschnitten 16 der Längsversteifungen 6 verschweißt werden und sich zudem konturnah auf der Oberfläche 12 ablegen und dort erstarren. Dabei werden zumindest die zu verschweissenden Kontaktstellen des Hautfeldes 4 und der Längsversteifungen 6 über die Induktionsschweißeinrichtungen 18 kontrolliert erhitzt um die Verschweissung zu fördern. Dann werden die Werkzeugform 8 und der Pressstempel 10 in Längsrichtung L bzw. Vorschubrichtung 26 mit der gleichen Geschwindigkeit bewegt, so dass der relative Geschwindigkeitsunterschied zwischen der Werkzeugform 8 und des sich in die gleiche Richtung bewegenden Pressstempels 10 gleich Null ist. Nach einer definierten Anpresszeit wird der Pressstempel 10 derart angesteuert, dass er eine Hebebewegung 28 in Richtung weg von der Werkzeugform 8 ausführt. Die Werkzeugform 8 führt unverändert eine kontinuierliche Vorschubbewegung in Längsrichtung L aus. Nach dem Anheben des Pressstempels 10 wird dieser über eine Bewegung 30 in Gegenrichtung zurück zu seiner Startposition geführt. Nach dem Erreichen seiner Startposition hat der Pressstempel 10 quasi eine Kreisbewegung beschrieben, die solange wiederholt wird, bis das Hautfeld 4 über seine gesamte Länge mit den Längsversteifungen 6 verschweißt ist. Dabei wird der Pressstempel 10 bei der Gegenbewegung 30 um den gleichen Betrag fortbewegt wie bei der Vorschubbewegung 26. Jedoch entspricht die Bewegung in Vorschubrichtung 26 des Pressstempels 10 einem Bruchteil seiner körperlichen Erstreckung in Vorschubrichtung 26, so dass bei jeder Kreisbewegung zwischen dem Pressstempel 10 und dem Hautfeld 4 Überlappungsbereiche gebildet werden und zumindest kleine Bereiche, wenn nicht jeder Hautfeldabschnitt zweimal temperatur- und druckbeaufschlagt wird. Nach dem Verschweißen des Hautfeldes 4 mit den Längsversteifungen 6 wird das Schalenelement 2 der Werkzeugform 8 entnommen bzw. die benötigte Hautfeldlänge von dem die Presse kontinuierlich verlassenden Hautfeldstrang abgetrennt und einer evtl. weiteren mechanischen Bearbeitung zur Glättung von Bauteilkanten, Einbringen von Fensterausschnitten, Türausschnitten und dergleichen zugeführt.

Offenbart ist ein Verfahren zur Herstellung eines faserverstärkten thermoplastischen Verbundbauteils aus einer Vielzahl von Bauteilkomponenten, die kontinuierlich in Vorschubrichtung bewegt werden und abschnittsweise über einen in Vorschubrichtung und in Gegenrichtung verfahrbaren Pressstempel miteinander verbunden werden, sowie eine Vorrichtung zur Durchführung des Verfahrens.

### Bezugszeichenliste

- 1: Vorrichtung
- 2: Schalenelement
- 4: Hautfeld
- 6: Längsversteifung
- 8: Werkzeugform
- 10: Pressstempel
- 12: konkave Oberfläche
- 14: Vertiefung
- 16: Fußabschnitt
- 18: Heizeinrichtung
- 20: konvexe Gegenfläche
- 22: Zylinderkolbenanordnung
- 24: Senkbewegung
- 26: Bewegung in Vorschubrichtung
- 28: Hebebewegung
- 30: Gegenbewegung in Gegenrichtung

- L: Längsrichtung/Vorschubrichtung

## Patentansprüche

1. Verfahren zur Herstellung eines faserverstärkten thermoplastischen Verbundbauteils (2), aus einer Vielzahl von Bauteilkomponenten (4, 6), beispielsweise ein Schalenelement für ein Flugzeug, das mit Versteifungselementen verstärkt ist, die mittels einer die Geometrie des Verbundbauteils (2) abbildendenden Werkzeugform (8) zueinander positioniert sind, **dadurch gekennzeichnet, dass** die Bauteilkomponenten (4, 6) kontinuierlich in Vorschubrichtung (26) bewegt und abschnittsweise über einen in Vorschubrichtung (26) und in Gegenrichtung (30) verfahrbaren Pressstempel (10) miteinander verbunden werden.

2. Verfahren nach Anspruch 1, wobei der Pressstempel (10) beim Verbinden der Bauteilkomponenten (4, 6) aus einer Startposition in Vorschubrichtung (26) der Bauteilkomponenten (4, 6) verfahren wird und anschließend eine Bewegung in Gegenrichtung (30) ausführt.

3. Verfahren nach Anspruch 2, wobei der Pressstempel (10) zur Startposition zurückbewegt wird.

4. Verfahren nach Anspruch 1, 2 oder 3, wobei der Pressstempel (10) in Vorschubrichtung (26) eine Erstreckung hat, die größer ist als sein Vorschubweg.

5. Verfahren nach einem der vorhergehenden Ansprüche, wobei zumindest eine der Bauteilkomponenten (4) kontinuierlich auf der Werkzeugform (8) abgelegt wird.

6. Verfahren nach Anspruch 5, wobei die zumindest eine Bauteilkomponente (4) vor dem Ablegen auf der Werkzeugform (8) erwärmt wird.

7. Verfahren nach einem der vorhergehenden Ansprüche, wobei zumindest eine der Bauteilkomponenten (6) im erstarrten Zustand der Werkzeugform (8) zugeführt wird.

8. Verfahren nach einem der vorhergehenden Ansprüche, wobei die Bauteilkomponenten (4, 6) beim Verbinden durch den Pressstempel (10) kontrolliert abgekühlt werden.

9. Vorrichtung (1) zur Herstellung eines faserverstärkten thermoplastischen Verbundbauteils (2) nach einem Verfahren nach einem der vorhergehenden Ansprüche, mit einer in Vorschubrichtung verfahrbaren Werkzeugform (8) zur Positionierung der Bauteilkomponenten (4, 6) zueinander und mit einem in Vorschubrichtung (26) und in Gegenrichtung (30) verfahrbaren Pressstempel (10) zum Verbinden der Bauteilkomponenten (4, 6).

10. Vorrichtung nach Anspruch 9, wobei in die Werkzeugform (8) im Bereich der aufzunehmenden Bauteilkomponenten (4, 6) zumindest jeweils eine Heizeinrichtung (18) angeordnet ist.

## Claims

1. Method for producing a fiber-reinforced thermoplastic composite component (2), comprising a plurality of components (4, 6), for example a shell element for an aircraft reinforced with stiffening elements, which are positioned relative to one another by a tool mold (8) depicting the geometry of the composite component (2), **characterized in that** the components (4, 6) are moved continuously in feed direction (26) and are connected partially to one another via a punch (10) which can be moved in feed direction (26) and in opposite direction (30).

2. The method of claim 1, wherein the punch (10) when connecting the components (4, 6) from a starting position in feed direction (26) of the components (4,6) is moved and then performs a movement in opposite direction (30).

3. The method of claim 2, wherein the punch (10) is moved back to the start position.

4. The method of claim 1, 2 or 3, wherein the punch (10) has an extension in feed direction (26) which is greater than its feed path.

5. Method according to one of the preceding claims, wherein at least one of the components (4) is deposited continuously on the tool mold (8).

6. Method of claim 5, wherein the at least one component (4) is heated prior to depositing on the tool mold (8).

7. Method according to one of the preceding claims, wherein at least one of the component (6) is supplied to the tool mold (8) in solidified state.

8. Method according to any one of the preceding claims, wherein the components (4, 6) are cooled in a controlled manner upon connection by the punch (10).

9. Apparatus (1) for producing a fiber reinforced thermoplastic composite component (2) according to a method according to one of the preceding claims, comprising a tool mold (8) movable in the feed direction for positioning the components (4, 6) relative to one another and a punch (10) which is movable in feed direction (26) and in opposite direction (30) for connecting the component components (4, 6).

10. Apparatus according to claim 9, wherein in the tool mold (8) at least one heating device (18) is arranged in each case in the region of the components (4, 6) to be accommodated.

## Revendications

1. Procédé de fabrication d'un composant composite thermoplastique renforcé de fibres (2) comprenant plusieurs composants (4, 6), par exemple un élément de coque pour avion renforcé par des éléments raidisseurs positionnés l'un par rapport à l'autre au moyen d'un moule (8), characterise en ce que les composants (4, 6) sont déplacés en continu dans la direction d'avance (26) et sont connectés partiellement entre eux par un poinçon (10) déplaçable dans la direction d'avance (26) et dans la direction opposée (30).

2. Procédé selon la revendication 1, dans lequel le poinçon (10) en connectant les composants (4, 6) est déplacé d'une position de départ en direction d'avance (26) des composants (4,6) et effectue ensuite un mouvement dans la direction opposée (30).

3. Procédé selon la revendication 2, dans lequel le poinçon (10) est ramené à la position de départ.

4. Procédé selon la revendication 1, 2 ou 3, dans lequel le poinçon (10) dans la direction d'avance (26) a une extension qui est supérieure à son trajet d'avancement.

5. Procédé selon l'une des revendications précédentes, dans lequel au moins l'une des composants (4) est déposée en continu sur le moule (8).

6. Procédé selon la revendication 5, dans lequel le au moins un composant (4) est chauffé avant le dépôt sur le moule (8).

7. Procédé selon l'une des revendications précédentes, dans lequel au moins l'un des composants (6) est fourni au moule (8) en état solidifié.

8. Procédé selon l'une quelconque des revendications précédentes, dans lequel les composants (4, 6) sont refroidies d'une manière contrôlée lors de la connexion par le poinçon (10).

9. Appareil (1) de fabrication d'un composant composite thermoplastique renforcé par fibres (2) selon un procédé selon l'une des revendications précédentes, comprenant un moule (8) déplaçable dans la direction d'avance pour positionner les composants (4, 6) l'un par rapport à l'autre (10) et un poinçon (10) déplaçable dans la direction d'avance (26) et dans la direction opposée (30) pour connecter les composants (4, 6).

10. Appareil selon la revendication 9, dans lequel au moins un dispositif de chauffage (18) est disposé dans le moule d'outil (8) dans la région des parties constitutives (4, 6) à recevoir dans chaque cas.
